# EUROPÄISCHE PATENTSCHRIFT

(11) **EP 1 680 301 B1**
(45) Veröffentlichungstag und Bekanntmachung des Hinweises auf die Patenterteilung: **16.01.2008**
(21) Anmeldenummer: 04790838.9
(22) Anmeldetag: 26.10.2004
(51) Int. Cl.: B60K 23/08, B60G 17/015

(54) **STEUERUNGSSYSTEM FÜR EIN FAHRZEUG**
VEHICLE CONTROL SYSTEM
SYSTEME DE COMMANDE D'UN VEHICULE

(30) Priorität: 05.11.2003 DE 10351652
(43) Veröffentlichungstag der Anmeldung: 19.07.2006
(73) Patentinhaber: Daimler AG, 70327 Stuttgart (DE)
(72) Erfinder: FREY, Gerhard, D-73733 Esslingen (DE); HEILMANN, Harro, D-73760 Ostfildern (DE); HOLLOH, Klaus-Dieter, D-71394 Kernen (DE); MARTENS, Eilert, D-73630 Remshalden (DE); QUINGER, Christian, D-73614 Schorndorf (DE); SCHWARZHAUPT, Andreas, D-76829 Landau (DE); SPIEGELBERG, Gernot, D-71296 Heimsheim (DE); SULZMANN, Armin, D-69115 Heidelberg (DE)
(86) Internationale Anmeldenummer: PCT/EP2004/012053
(87) Internationale Veröffentlichungsnummer: WO 2005/047050

(56) Entgegenhaltungen:
- DE-A1- 10 032 179
- DE-A1- 10 136 258
- DE-A1- 19 838 336
- US-A1- 2003 130 782

## Beschreibung

Die vorliegende Erfindung betrifft ein Steuerungssystem für ein Fahrzeug mit den Merkmalen des Oberbegriffs des Anspruchs 1.

Aus der DE 100 32 179 A1, die auch die Merkmale des Oberbegriffs des Anspruchs 1 beinhaltet, ist ein Steuerungssystem bekannt, das mit einem elektronisch ansteuerbaren Antriebsstrang arbeitet, der zumindest eine Lenkungsanlage, eine Bremsanlage und ein Antriebsaggregat des Fahrzeugs umfasst. Das Steuerungssystem weist eine Eingabeebene mit Einrichtungen zum Eingeben kontinuierlicher Vorgaben eines Fahrers und zum Umsetzen der Vorgaben in Sollwertsignale auf. Das Steuerungssystem umfasst des Weiteren eine Koordinationsebene zum Umsetzen der Sollwertsignale in Ansteuersignale, die von Aktuatoren des Antriebsstrangs umgesetzt werden. Mit anderen Worten, das Steuerungs system besitzt eine Steuereinrichtung, die aus einem eingangsseitigen Bewegungsvektor ausgangsseitig Steuersignale zum Ansteuern des Antriebsstrangs generiert und die zur Übertragung der Steuersignale mit dem Antriebsstrang gekoppelt ist, der dann die Steuersignale zur Umsetzung des Fahrerwunsches abarbeitet, sogenanntes "Drive-by-Wire-System" oder "X-by-Wire-System".

Aus der US 2003/130782 A1, der DE 198 38 336 A1 und der DE 101 36 258 A1 sind andere Steuerungssysteme für Verkehrsmittel bekannt, wobei über Steuergeräte jeweils Aggregate des Fahrzeugs angesteuert werden.

Aus der DE 100 46 832 A1 ist ein weiteres Steuerungssystem bekannt, das zum Steuern eines mit einem elektronisch ansteuerbaren Antriebsstrang ausgestatteten Fahrzeugs geeignet ist. In einer Speichereinrichtung werden die Fahrdynamik betreffende Fahrzeugdaten, Zeitdaten, Positionsdaten, fahrerseitige Betätigungssignale und von einer Steuereinrichtung erzeugte Ansteuersignale für den Antriebsstrang gespeichert. Ein derartiges Steuerungssystem ermöglicht eine verbesserte Unfallanalyse.

Die vorliegende Erfindung beschäftigt sich mit dem Problem, für ein Steuerungssystem der eingangs genannten Art eine verbesserte Ausführungsform anzugeben, mit der insbesondere kürzere Steuerungszeiten erreicht werden.

Erfindungsgemäß wird dieses Problem durch den Gegenstand des unabhängigen Anspruchs gelöst. Vorteilhafte Ausführungsformen sind Gegenstand der abhängigen Ansprüche.

Die Erfindung beruht auf dem allgemeinen Gedanken, bei einem Steuerungssystem für ein Fahrzeug, mit einem elektronisch ansteuerbaren Antriebsstrang sowie einer Koordinationsebene und einer der Koordinationsebene untergeordneten Ausführungsebene ein Achselektronikmodul vorzusehen, welches zur Betätigung zumindest eines der Fahrzeugachse zugeordneten Bremsaktuators ausgebildet und im Bereich einer Fahrzeugachse angeordnet ist. Das Achselektronikmodul ist dabei sowohl mit der Koordinationsebene als auch mit der Fahrzeugachse zugeordneten Achsaktuatoren verbunden, und erhält von der Koordinationsebene aus Fahrerwünschen generierte Sollwerte zur Ermittlung von Ansteuersignalen zum Ansteuern des jeweiligen Achsaktuators.

Das erfindungsgemäße Steuerungssystem besitzt zumindest zwei Steuerungsebenen, nämlich die einem Systemsteuergerät zugeordnete Koordinationsebene, in welcher aus Zustandsgrößen des Fahrzeugs und aus Fahrerwünschen Sollwerte generiert und aus diesen Ansteuersignale zum Ansteuern von Aktuatoren erzeugt werden, und die der Koordinationsebene untergeordnete und dem Achselektronikmodul zugeordnete Ausführungsebene, welche Aktuatoren zum Ausführen der Ansteuersignale aufweist. Erfindungswesentlich ist dabei, dass das Achselektronikmodul zur Betätigung zumindest eines der Fahrzeugachse zugeordneten Bremsaktuators vorgesehen ist und im Bereich der Fahrzeugachse angeordnet ist und dass das Achselektronikmodul mit der Koordinationsebene zur Übertragung von Sollwerten verbunden ist und zur Ermittlung von Ansteuersignalen zum Ansteuern des jeweiligen Achsaktuators aus den Sollwerten ausgebildet ist, wobei das Achselektronikmodul mit einer steuerbaren Differenzialsperre zur Übertragung der Ansteuersignale verbunden ist.

Dies bedeutet, dass im Unterschied zu bisherigen Steuerungssystemen die obengenannten achsspezifischen Elemente bzw. Anlagen nunmehr von dem Achselektronikmodul gesteuert werden, wogegen weitere Aktuatoren in herkömmlicher Weise mit in der Koordinationsebene generierten Steuersignalen angesteuert werden. Durch die Ansteuerung der Sensoren, Aktuatoren und des Achselektronikmoduls an der Achse bzw. in der Nähe der Achse ist die Achse funktional prüfbar.

Die erfindungsgemäße Lösung bietet den großen Vorteil, sämtliche Steuerungsvorgänge für achsspezifische Aktuatoren in dem Achselektronikmodul zu integrieren bzw. zu bündeln und dadurch vom herkömmlichen Steuerungssystem insoweit zu separieren. Das Achselektronikmodul, welches im Bereich der Fahrzeugachse angeordnet ist, befindet sich in unmittelbarer Nachbarschaft der Achsaktuatoren, so dass sich die Leitungswege zwischen den Achsaktuatoren und dem Achselektronikmodul im Vergleich zur bisherigen Ausführung deutlich verkürzen und sich dadurch auch die benötigten Steuerungszeiten reduzieren lassen. Es wird somit eine einfache Vernetzung der Achsaktuatoren mit dem Achselektronikmodul erreicht, wodurch sich insbesondere Vorteile im Bereich der Verkabelung und damit im Bereich der Fertigung ergeben und gleichzeitig die Möglichkeit eröffnet wird, zumindest einen Teil einer koordinierenden Software zur Ansteuerung achsspezifischer Funktion, wie beispielsweise Bremsen und/oder Sperren des Differentials, in das Achselektronikmodul und somit in die Ausführungsebene zu integrieren.
Durch die lokale Anordnung der Sensoren, Aktuatoren und Achselektronikmodule entfällt somit die Varianz der Leitungen, wodurch sich die Leitungslängen und Varianten reduzieren. Vermieden werden zudem Einbauten, welche bereits von Anfang an defekt sind.

Zweckmäßig kann das Achselektronikmodul Elektronik und/oder Software und/oder lokale Regelkreise für wenigstens eine der folgenden Funktionen umfassen: Bremsen, Sperren eines Differentials, Nicken und/oder Wanken, Regeln eines Niveaus. Hierdurch sind viele achsspezifischen bzw. fahrwerkspezifischen Elektronik- und/oder Softwarekomponenten und/oder Regelkreise in das Achselektronikmodul integriert und ermöglichen dadurch eine schnelle Reaktion auf sich ändernde Daten, wie beispielsweise Fahrerwünsche und/oder Zustandsgrößen des Fahrzeugs. Zusätzlich können in der koordinierenden Software vorausschauende Algorithmen programmiert sein, welche eine bezüglich eines Verbrauchs und eines Fahrkomforts optimale Einstellung ermöglichen.

Gemäß einer vorteilhaften Weiterbildung der erfindungsgemäßen Lösung regelt die Elektronik und/oder die Software und/oder der lokale Regelkreis für die Bremsfunktion zumindest ein Element aus nachfolgender Auflistung: Bremsdruck, lokales ABS, ABS-Signalerfassung und -verarbeitung, aktive Verschleißeinstellung für eine Fahrzeugbremse, Belagverschleißsensierung. Diese Aufzählung soll verdeutlichen, dass die Elektronik und/oder die Software und/oder der lokale Regelkreis, welcher die Bremsfunktion regelt mehrere Unterfunktionen aufweist, von denen einige wenige vorstehend genannt wurden. Das Achselektronikmodul ist somit in der Lage viele achsspezifische Kennwerte zu erfassen bzw. zu steuern.

Weitere vom Achselektronikmodul steuerbaren Elementen sind beispielsweise ein Reifenmanagement, welches einen Reibkoeffizienten zwischen Fahrbahn und Reifen berechnet, ein Schmiermittelmanagement für ein Achsdifferential sowie weitere achsrelevante Aktuatoren.

Weitere wichtige Merkmale und Vorteile der Erfindung ergeben sich aus den Unteransprüchen, aus der Zeichnung und aus der zugehörigen Figurenbeschreibung anhand der Zeichnung.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ein bevorzugtes Ausführungsbeispiel der Erfindung ist in der Zeichnung dargestellt und wird in der nachfolgenden Beschreibung näher erläutert.

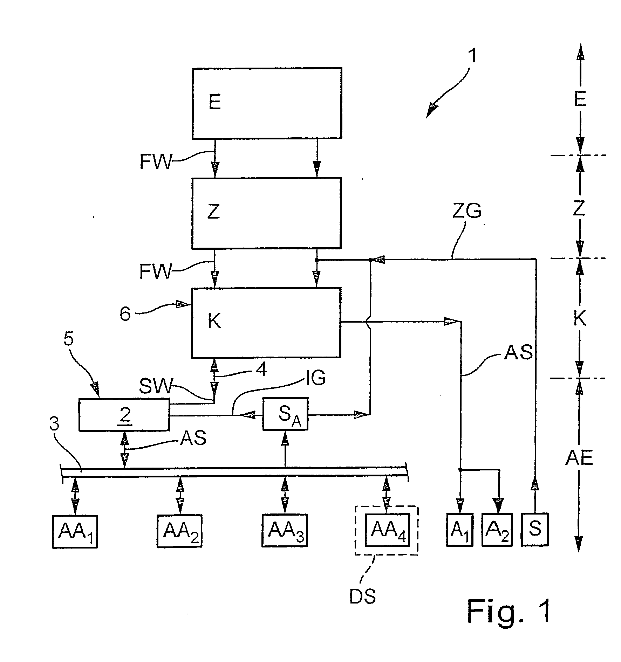

Die einzige Fig. 1 zeigt eine schematische Darstellung einer Ausführungsform eines erfindungsgemäßen Steuerungssystems.

Entsprechend Fig. 1 weist ein erfindungsgemäßes Steuerungssystem 1 für ein Fahrzeug mehrere Signalverarbeitungsebenen auf. Beispielhaft sind hier insgesamt vier Ebenen dargestellt, nämlich eine Eingabeebene E, eine Zwischenebene Z, eine Koordinationsebene K und eine Ausführungsebene AE, welche der Koordinationsebene K unter- bzw. nachgeordnet ist. In der Eingabeebene E gibt ein Fahrer Vorgaben in Form von Fahrerwünschen FW ein, indem er beispielsweise Bedienelemente, wie z.B. ein Fahrpedal, ein Bremspedal oder ein Lenkrad betätigt oder in einer bestimmten Stellung hält. Die Eingaben können dabei kontinuierlich oder diskreter Art sein.

Die in Fig. 1 dargestellte Zwischenebene Z kann je nach Ausführungsform entweder eine einzige Zwischenebene Z oder mehrere Ebenen umfassen, beispielsweise eine Vorhersageebene und/oder eine Korrekturebene. Denkbar ist auch, dass die Koordinationsebene K direkt nach der Eingabeebene E angeordnet ist und der Fahrerwunsch FW direkt von der Eingabeebene E an die Koordinationsebene K übermittelt wird.

In der Koordinationsebene K, die einem Systemsteuergerät 6 zugeordnet ist, werden aus Zustandsgrößen ZG des Fahrzeugs und aus den Fahrerwünschen FW Sollwerte SW generiert und aus diesen Ansteuersignale AS zum Ansteuern von Aktuatoren A erzeugt. Die Zustandsgrößen ZG werden über eine entsprechende Verbindung von Sensoren S des Fahrzeugs übermittelt und spiegeln einen Ist-Zustand bezogen auf die Fahrsituation wieder. Die von der Koordinationsebene K erzeugten Ansteuersignale AS steuern gemäß Fig. 1 Aktuatoren A, welche in der Ausführungsebene AE angeordnet sind und welche beispielsweise als Aktuator A₁ für einen nicht dargestellten Fahrzeugmotor und/oder einen Aktuator A₂ für ein ebenfalls nicht dargestelltes Getriebe ausgebildet sind. Die Ausführungsebene AE ist dabei steuerungstechnisch der Koordinationsebene K nachgelagert.

Die Erfindung sieht nun vor, Achsaktuatoren AA, wie beispielsweise einen Bremsaktuator AA₁ oder einen Niveauregulierungsaktuator AA₂, von einem Achselektronikmodul 2 betätigen und/oder steuern zu lassen. Das Achselektronikmodul 2 ist Teil eines Achssteuergeräts 5. Die Achsaktuatoren AA sind dabei zumindest einer Fahrzeugsachse 3 zugeordnet. Das Achselektronikmodul 2 ist mit der Koordinationsebene K zur Übertragung von Sollwerten SW verbunden und zur Ermittlung von Ansteuersignalen AS zum Ansteuern des jeweiligen Achsaktuators AA aus den Sollwerten SW ausgebildet. Das Achselektronikmodul 2 erhält zur Erzeugung der Ansteuersignale AS zum einen Sollwertvorgaben SW aus der Koordinationsebene K sowie Ist-Größen IG aus einem oder mehreren Sensoren S_{A}, welche zur Erfassung von fahrdynamischen Daten ausgebildet sind. Die Sollwerte SW, welche eingangsseitig des Achselektronikmoduls 2 ankommen, sind in der Koordinationsebene K aus den Fahrerwünschen FW sowie aus Zustandgrößen ZG generiert.

Die im Achselektronikmodul 2 erzeugten Ansteuersignale AS steuern die zugeordneten Achsaktuatoren AA. Der beispielhafte Sensor S_{A}, welcher Ist-Größen IG für das Achselektronikmodul 2 erzeugt, kann zusätzlich mit anderen Sensoren S über eine Verbindungsleitung eingangsseitig mit der Koordinationsebene K verbunden sein und dadurch Ist-Größen IG bezüglich eines Fahrzustandes sowohl an das Achselektronikmodul 2 als auch an die Koordinationsebene K übermitteln.

Das Achselektronikmodul 2 kann über einen CAN-Bus 4 mit der Koordinationsebene K verbunden sein, wobei auch denkbar ist, dass weitere Verbindungen, beispielsweise zwischen den Achsaktuatoren AA und dem Achselektronikmodul 2 und/oder den Sensoren S und der Eingangsseite der Koordinationsebene K als CAN-Bus-Leitungen ausgebildet sind.

Gemäß Fig. 1 ist das Achselektronikmodul 2 achsnah angeordnet, so dass ein Regelkreis zwischen dem Achselektronikmodul 2, den Achsaktuatoren AA und den zugehörigen Sensoren S_{A} im Vergleich zum herkömmlichen Steuerungssystem deutlich verkürzt ist. Durch die erfindungsgemäße Lösung kann ein Verkabelungsaufwand deutlich reduziert werden und die Vernetzung zwischen einzelnen Achsaktuatoren AA und dem Steuerungssystem 1 deutlich vereinfacht werden. Das Achselektronikmodul 2 führt dabei Aufgaben aus, welche ursprünglich in der Koordinationsebene K angesiedelt waren und jetzt durch die Ausgliederung des Achselektronikmoduls 2 aus der Koordinationsebene K nunmehr in die Ausführungsebene AE verlagert sind.

Das Achselektronikmodul 2 kann dabei Elektronik und/oder Software und/oder lokale Regelkreise für beispielsweise Bremsen, Differenzialsperre DS Nicken und/oder Wanken, und/oder Regeln eines Niveaus umfassen. Die Elektronik und/oder die Software und/oder die lokalen Regelkreise für vorstehend genannten Funktionen können dabei direkt vor Ort im elektronischen Achselektronikmodul 2 implementiert sein. Durch vorausschauende Algorithmen in der Koordinationsebene K und/oder im Achselektronikmodul 2 kann ein bezüglich Verbrauch und Fahrkomfort optimales Ergebnis erzielt werden.

Die Elektronik und/oder die Software und/oder der lokale Regelkreis für die Bremsfunktion im Achselektronikmodul 2 ist dabei für die Regelung verschiedenartiger Elemente, wie beispielsweise eines Bremsdrucks, eines lokalen ABS, einer aktiven Verschleißeinstellung für die Fahrzeugbremse oder eine Belagverschleißsensierung ausgebildet. Diese Aufzählung erhebt dabei in keinster Weise Anspruch auf Vollzähligkeit, sondern stellt lediglich eine Auswahl möglicher Elemente dar.

Durch die Vernetzung über den CAN-Bus 4 ist gleichzeitig beispielsweise eine einfache Vernetzung von Bremse und Differenzialsperre DS und somit ein schnell schaltendes Quersperren möglich. Bei eingeschalteter Sperre und Erkennung einer Drehzahldifferenz kann dabei die Sperre unmittelbar eingelegt werden. Die Sperre kann auch unter Last durch Motor- und/oder Bremseingriff unter Beibehaltung der Fahrstabilität abgeschaltet werden. Zu dem kann die Differenzialsperre DS als ESP-kompatible Differenzialsperre ausgebildet sein.

Desweiteren kann das Achselektronikmodul 2 Elektronik und/oder Software und/oder lokale Regelkreise für beispielsweise ein Reifenmanagement, ein Schmiermittelmanagement für ein Achsdifferential, einen Reifendrucksensor oder andere achsrelevante Aktuatoren umfassen.

Zusammenfassend lassen sich die wesentlichen Merkmale der erfindungsgemäßen Lösung wie folgt charakterisieren:

Die Erfindung sieht vor, bei einem Steuerungssystem 1 für ein Fahrzeug mit einem elektronisch ansteuerbaren Antriebsstrang und einer Koordinationsebene K sowie einer der Koordinationsebene K untergeordneten Ausführungsebene ein Achselektronikmodul 2 zur Betätigung zumindest eines einer Fahrzeugsachse 3 zugeordneten Achsaktuators AA vorzusehen, wobei das Achselektronikmodul 2 mit der Koordinationsebene K zur Übertragung von Sollwerten SW verbunden ist und zur Ermittlung von Ansteuersignalen AS zum Ansteuern des jeweiligen Achsaktuators AA aus den Sollwerten SW ausgebildet ist. Das Achselektronikmodul 2 ist dabei mit den Achsaktuatoren AA zur Übertragung der Ansteuersignale AS verbunden.

Im Unterschied zu herkömmlichen Steuerungssystem ist bei dem erfindungsgemäßen Steuerungssystem 1 zumindest ein Teil der Software bzw. der Elektronik im Achselektronikmodul 2 angeordnet und somit von der Koordinationsebene K in die Ausführungsebene AE verlagert.

Durch die achsnahe Anordnung des Achselektronikmodul 2 werden konstruktive Vorteile hinsichtlich einer möglichen Verkabelung sowie eine verkürzte Schaltzeit in den Regelkreisen und damit ein verbessertes Reaktionsvermögen des Steuerungssystem 1 erzielt.

Durch die Anordnung der Sensoren, Aktuatoren und des Achselektronikmoduls 2 an der Achse bzw. in der Nähe der Achse ist die Achse funktional prüfbar. Folgende Prüfungen sind möglich: Elektrische Verdrahtung, pneumatische Verrohrung, Sensorik, Aktuatorik, Elektronik, Hardware und Software. Dies betrifft die Bremse, die Differenzialsperre DS und alle weiteren Funktionen. Die Kennlinien der Sensoren sind lernbar und die Anfangs- und Endwerte müssen somit nicht mehr manuell eingestellt werden. Die Achse kann somit vollständig geprüft und parametriert an das Fahrzeugband als vormontiertes und vorgetestetes Aggregat angeliefert werden.

Durch die lokale Anordnung der Sensoren S, Aktuatoren A und Achselektronikmodule 2 entfällt die Varianz der Leitungen, elektrisch und pneumatisch, hervorgerufen durch die Anbindung der Fahrzeugachse an unterschiedliche Fahrzeugrahmenhöhen. Hiermit reduzieren sich die Leitungslängen und Varianten. Vermieden werden zudem Einbauten, welche bereits von Anfang an defekt sind. Ein weiterer Vorteil ist die Reduzierung von Steckverbindungen.

Durch einseitiges Bremsen des kurvenäußeren Rades wird die Achse in einen nahezu momentenfreien Zustand (frei von Differenzmomenten) überführt. In diesem Zustand kann dann die Differenzialsperre DS aktiviert werden. Der momentenfreie Zustand der Achse kann über die ABS-Sensorik indirekt, bspw. durch Auswerten eines Impulsdrehzahlfensters der linken und rechten Radseite mit Berücksichtigung der Elastizitäten der Achse, oder über Drehmomentensensorik oder weitere (optische) Verfahren direkt ermittelt werden. Die rechnerische Ermittlung des momentenfreien Zustandes erlaubt auch einen geregelten, am Bedarf der Achsentlastung orientierten, Bremseingriff. Zur Steigerung des Fahrkomforts kann das Moment, welches durch das Einbremsen eines Rades für den Vortrieb weniger zur Verfügung steht, über einen gezielten Motoreingriff aufgebaut werden.

## Patentansprüche

1. Steuerungssystem (1) für ein Fahrzeug,
- mit einem elektronisch ansteuerbaren Antriebsstrang,
- mit einer einem Systemsteuergerät (6) zugeordneten Koordinationsebene (4), in welcher aus Zustandsgrößen (ZG) des Fahrzeugs und aus Fahrerwünschen (FW) Sollwerte (SW) generiert und aus diesen Ansteuersignale (AS) zum Ansteuern von Aktuatoren (A) erzeugt werden,
- mit einer der Koordinationsebene (K) untergeordneten Ausführungsebene (AE), welche Aktuatoren (A) zum Ausführen der Ansteuersignale (AS) aufweist,
**dadurch gekennzeichnet,**
- **dass** ein Achselektronikmodul (2) zur Betätigung zumindest eines der Fahrzeugachse (3) zugeordneten Bremsaktuators (AA₁) vorgesehen ist und im Bereich der Fahrzeugachse (3) angeordnet ist,
- **dass** das Achselektronikmodul (2) mit der Koordinationsebene (K) zur Übertragung von Sollwerten (SW) verbunden ist und zur Ermittlung von Ansteuersignalen (AS) zum Ansteuern des jeweiligen Achsaktuators (AA) aus den Sollwerten (SW) ausgebildet ist,
- **dass** das Achselektronikmodul (2) mit einer steuerbaren Differenzialsperre (DS) zur Übertragung der Ansteuersignale (AS) verbunden ist.

2. Steuerungssystem nach Anspruch 1,
**dadurch gekennzeichnet,**
**dass** das Steuerungssystem (1) ein der Ausführungsebene (AE) zugeordnetes und im Bereich der Fahrzeugachse (3) angeordnetes Achssteuergerät (5) aufweist, welches das Achselektronikmodul (2) enthält.

3. Steuerungssystem nach Anspruch 1 oder 2,
**dadurch gekennzeichnet,**
**dass** das Achselektronikmodul (2) Sensoren zur Erfassung der Achsdrehmomente aufweist und ein Aktor zum Sperren des Differenzials vorgesehen ist, der die Differenzialsperre (DS) aktiviert, wenn die Achsdrehmomente einen vorbestimmten Wert erreichen.

4. Steuerungssystem nach einem der Ansprüche 1 bis 3,
**dadurch gekennzeichnet,**
**dass** das Achselektronikmodul (2) Elektronik und/oder Software und/oder lokale Regelkreise für wenigstens eine der folgenden Funktionen umfasst:
- Bremsen,
- Sperren eines Differentials,
- Nicken und/oder Wanken,
- Regeln eines Niveaus.

5. Steuerungssystem nach Anspruch 4,
**dadurch gekennzeichnet,**
**dass** die Elektronik und/oder die Software und/oder der lokale Regelkreis für die Bremsfunktion zumindest ein Element aus nachfolgender Auflistung regelt:
- Bremsdruck,
- Lokales ABS,
- ABS Signalerfassung und -verarbeitung,
- Aktive Verschleißeinstellung für eine Fahrzeugbremse,
- Belagverschleißsensierung.

6. Steuerungssystem nach Anspruch 4 oder 5,
**dadurch gekennzeichnet,**
**dass** die Differenzialsperre (DS) als ESP-kompatible Differenzialsperre ausgebildet ist.

7. Steuerungssystem nach einem der Ansprüche 4 bis 6,
**dadurch gekennzeichnet,**
**dass** die Elektronik und/oder die Software und/oder der lokale Regelkreis für die Nick- und/oder die Wankfunktion einen lokalen Algorithmus aufweist.

8. Steuerungssystem nach einem der Ansprüche 4 bis 7,
**dadurch gekennzeichnet,**
**dass** das Achselektronikmodul (2) Elektronik und/oder Software und/oder lokale Regelkreise für wenigstens ein Element aus folgender Gruppe umfasst:
- Reifenmanagement (Berechnung eines Reibkoeffizienten),
- Schmiermittelmanagement für Achsdifferential,
- Reifendrucksensor,
- achsrelevante Aktuatoren.

## Claims

1. Control system (1) for a vehicle,
- having an electronically controllable drive train,
- having a coordination level (4) which can be assigned to a system control device (6) and in which set point values (SW) are generated from state variables (ZG) of the vehicle and from driver's wishes (FW) and actuation signals (AS) for actuating actuators (A) are generated therefrom,
- having an execution level (AE) which is subordinate to the coordination level (K) and has actuators (A) for executing the actuation signals (AS),
**characterized**
- **in that** an axle electronic module (2) is provided for activating at least one brake actuator (AA₁) assigned to the vehicle axle (3), and is arranged in the region of the vehicle axle (3),
- **in that** the axle electronic module (2) is connected to the coordination level (K) in order to transmit set point values (SW), and is designed to determine actuation signals (AS) from the set point values (SW) in order to control the respective axle actuator (AA),
- **in that** the axle electronic module (2) is connected to a controllable differential lock (DS) in order to transmit the actuation signals (AS).

2. Control system according to Claim 1, **characterized in that** the control system (1) has an axle control device (5) which is assigned to the execution level (AE), is arranged in the region of the vehicle axle (3) and contains the axle electronic module (2).

3. Control system according to Claim 1 or 2, **characterized in that** the axle electronic module (2) has sensors for sensing the axle torques, and an actuator is provided for locking the differential, said actuator activating the differential lock (DS) when the axle torques reach a predetermined value.

4. Control system according to one of Claims 1 to 3, **characterized in that** the axle electronic module (2) comprises electronics and/or software and/or local control circuits for at least one of the following functions:
- braking,
- locking of a differential,
- pitching and/or rolling,
- regulating a ride level.

5. Control system according to Claim 4, **characterized in that** the electronics and/or the software and/or the local control circuit for the brake function regulates at least one element from the following list:
- brake pressure,
- local ABS,
- ABS signal acquisition and processing,
- active wear adjustment for a vehicle brake,
- sensing of brake lining wear.

6. Control system according to Claim 4 or 5, **characterized in that** the differential lock (DS) is designed as an ESP-compatible differential lock.

7. Control system according to one of Claims 4 to 6, **characterized in that** the electronics and/or the software and/or the local control circuit has a local algorithm for the pitching and/or the rolling function.

8. Control system according to one of Claims 4 to 7, **characterized in that** the axle electronic module (2) comprises electronics and/or software and/or local control circuits for at least one element from the following group:
- tire management system (calculation of a coefficient of friction),
- lubricant management system for axle differential,
- tire pressure sensor,
- axle-related actuators.

## Revendications

1. Système de commande (1) de véhicule automobile comprenant
■ une barre d'entraînement commandable électroniquement,
■ un niveau de coordination (4) attribué à un appareil de commande de système (6), dans lequel des valeurs de consigne (SW) sont générées à partir des grandeurs d'état (ZG) du véhicule et des souhaits du conducteur (FW) et à partir de celles-ci des signaux de commande (AS) sont générés pour commander des actionneurs (A),
■ un niveau d'exécution (AE) dépendant du de coordination (K) qui présente des actionneurs (A) pour exécuter les signaux de commande (AS),
**caractérisé en ce**
■ **qu'**un module d'électronique d'essieu (2) est prévu pour actionner au moins un actionneur de frein (AA₁) attribué à l'essieu du véhicule (3) et est disposé dans la zone de l'essieu du véhicule (3),
■ **que** le module d'électronique d'essieu (2) est relié au niveau de coordination (K) pour transmettre des valeurs de consigne (SW) et est formé pour déterminer des signaux de commande (AS) pour commander l'actionneur d'essieu (AA) respectif à partir des valeurs de consigne (SW),
■ **que** le module d'électronique d'essieu (2) est relié à un verrouillage de différentiel (DS) commandable pour transmettre les signaux de commande (AS).

2. Système de commande selon la revendication 1, **caractérisé en ce que** le système de commande (1) présente un appareil de commande d'essieu (5) attribué au niveau d'exécution (AE) et disposé au niveau de l'essieu du véhicule (3), lequel comprend le module d'électronique d'essieu (2).

3. Système de commande selon la revendication 1 ou 2, **caractérisé en ce que** le module d'électronique d'essieu (2) présente des capteurs de détection des couples de rotation d'essieu et un actionneur est prévu pour verrouiller le différentiel qui active le verrouillage de différentiel (DS) lorsque les couples de rotation d'essieu atteignent une valeur prédéfinie.

4. Système de commande selon l'une quelconque des revendications 1 à 3, **caractérisé en ce que** le module d'électronique d'essieu (2) comporte une électronique et/ou un logiciel et/ou des circuits de réglage locaux pour au moins l'une des fonctions suivantes :
■ freinage,
■ verrouillage d'un différentiel,
■ tangage ou roulis,
■ régulation d'un niveau.

5. Système de commande selon la revendication 4, **caractérisé en ce que** l'électronique et/ou le logiciel et/ou le circuit de réglage local régule pour la fonction de freinage au moins un élément de la liste suivante :
■ pression de freinage,
■ ABS local
■ détection et traitement du signal d'ABS,
■ réglage actif de l'usure pour un frein de véhicule automobile,
■ détection de l'usure des garnitures.

6. Système de commande selon l'une des revendications 4 ou 5, **caractérisé en ce que** le verrouillage de différentiel (DS) est formé comme verrouillage de différentiel compatible ESP.

7. Système de commande selon l'une des revendications 4 à 6, **caractérisé en ce que** l'électronique et/ou le logiciel et/ou le circuit de réglage local présente un algorithme local pour la fonction de tangage et/ou de roulis.

8. Système de commande selon l'une quelconque des revendications 4 à 7, **caractérisé en ce que** le module d'électronique d'essieu (2) comprend une électronique et/ou un logiciel et/ou des circuits de réglage locaux pour au moins un élément du groupe suivant :
■ gestion des pneus (calcul du coefficient de frottement),
■ gestion du lubrifiant pour le différentiel d'essieu,
■ capteur de pression des pneus,
■ actionneurs relatifs aux essieux.
